(19) Europäisches Patentamt
European Patent Office
Office européen des brevets

(11) EP 4 563 615 A1

(12) EUROPÄISCHE PATENTANMELDUNG

(43) Veröffentlichungstag:
**04.06.2025 Patentblatt 2025/23**

(21) Anmeldenummer: **23213220.9**

(22) Anmeldetag: **30.11.2023**

(51) Internationale Patentklassifikation (IPC):
***C08G 59/50*** (2006.01) ***C04B 40/06*** (2006.01)

(52) Gemeinsame Patentklassifikation (CPC):
(C-Sets verfügbar)
**C08G 59/5033; C04B 26/14; C04B 40/0666;**
C04B 2111/00715; C08K 2003/287 (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft**
**9494 Schaan (LI)**

(72) Erfinder: **Martin-Lasanta, Ana-Maria**
**35398 Gießen (DE)**

(74) Vertreter: **Hilti Aktiengesellschaft**
**Corporate Intellectual Property**
**Feldkircherstrasse 100**
**Postfach 333**
**9494 Schaan (LI)**

# (54) VERWENDUNG POLYFUNKTIONELLER EPOXIDVERBINDUNGEN ZUR VERBESSERUNG VON EIGENSCHAFTEN EINES CHEMISCHEN DÜBELS

(57) Die Erfindung betrifft die Verwendung von bestimmten polyfunktionellen Epoxidverbindungen als Reaktivverdünner in einer Epoxidharzmasse zur Verbesserung des Kriechverhaltens eines aus der Epoxidharzmasse hergestellten chemischen Dübels.

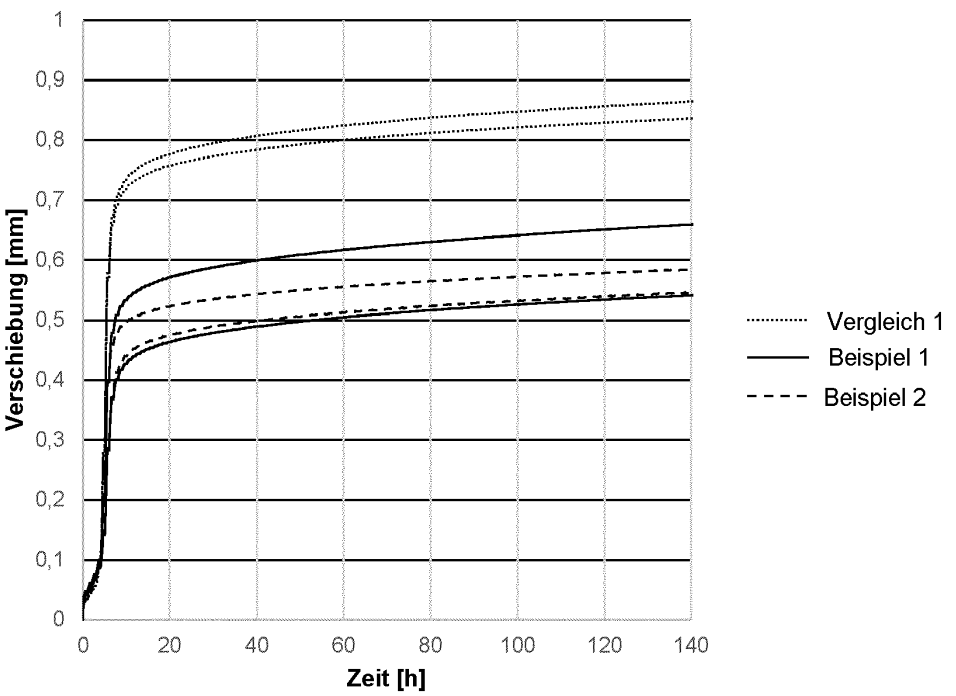


Fig. 1

EP 4 563 615 A1

(52) Gemeinsame Patentklassifikation (CPC): (Forts.)

C-Sets
**C04B 26/14, C04B 14/066, C04B 22/14,**
**C04B 22/085, C04B 40/065;**
**C08K 3/28, C08L 63/00;**
**C08K 5/1515, C08L 63/00**

## Beschreibung

Die Erfindung betrifft die Verwendung von bestimmten Epoxidverbindungen in einer Epoxidharzmasse zur Verbesserung des Kriechverhaltens eines aus der Epoxidharzmasse hergestellten chemischen Dübels.

Mehrkomponentige Klebstoffe und Mörtelsysteme werden häufig in Bauanwendungen eingesetzt. Solche Systeme bestehen oft aus einer Komponente, die eine Mischung verschiedener Epoxide enthält, und einem Aminhärter als Bestandteil einer zweiten Komponente. Nach Mischen und Aushärten des Systems wird ein hochvernetztes Polymer erhalten.

Eine Anwendung solcher mehrkomponentiger Systeme ist die als chemischer Dübel, bei der eine Ankerstange oder ein Verstärkungseisen in einem Untergrund wie Beton, Mauerwerk oder Holz befestigt wird. Für diese Anwendung werden sehr steife Systeme benötigt. Diese Steifigkeit wird in der ersten Komponente durch aromatische Grundstrukturen enthaltende Epoxide wie Bisphenol-A-diglycidylether, Bisphenol-F-diglycidylether und/oder Epoxy-modifizierte Novolake erreicht. Um die Verarbeitbarkeit zu erleichtern, werden üblicherweise Reaktivverdünner beigemischt, die die Viskosität absenken und eine bessere Mischbarkeit mit der Härterkomponente bewirken. Die Viskosität eines Reaktivverdünners muss daher niedriger sein als die des zu verdünnenden Epoxidharzes und er muss Gruppen aufweisen, die zu einer Reaktion mit dem Härter führen. Bei der Verwendung von Bisphenol-A-diglycidylether und Bisphenol-F-diglycidylether sollte der Reaktivverdünner eine Viskosität von weniger als 2000 mPas aufweisen, bevorzugt von weniger als 1000 mPas und besonders bevorzugt von weniger als 800 mPas. Üblicherweise werden di-, teils zusätzlich auch trifunktionelle Reaktivverdünner, wie in der EP 1118628 A1 beschrieben, zugemischt. Trifunktionelle Reaktivverdünner allein werden in der Regel nicht eingesetzt, da der verdünnende Effekt deutlich geringer ist als bei difunktionellen Verdünnern.

Ein Nachteil der Verwendung von di-funktionellen und nicht-reaktiven Verdünnern ist, dass sie den Vernetzungsgrad des Polymers im Vergleich zur aromatischen Grundstruktur nicht erhöhen. Damit wird auch die Steifigkeit des Polymers nicht erhöht, sondern bleibt im besten Fall auf gleichem Niveau. Gleiches gilt für die Glasübergangstemperatur von Systemen, die auf Epoxidharzmischungen mit di-funktionellen und nicht-reaktiven Verdünnern basieren. In der Regel führt die Beimischung dieser Verdünner zu einer Absenkung der Glasübergangstemperatur im Vergleich zu Epoxiden mit rein aromatischen Grundstrukturen. Dies führt zu einer Verringerung der Verbundspannung, insbesondere bei erhöhter Temperatur.

Die Aushärtung chemischer Dübel erfolgt typischerweise am gewünschten Verwendungsort bei den dort im Untergrund herrschenden Umgebungstemperaturen. Da chemische Dübel typischerweise im Bauwesen verwendet werden, entsprechen die Umgebungstemperaturen den Außentemperaturen. Diese bewegen sich üblicherweise im Bereich von etwa -10°C bis etwa 60°C. Im Untergrund sind je nach Sonneneinstrahlung und weiteren Einflüssen auch deutlich höhere Temperaturen möglich, beispielsweise von etwa 40°C bis etwa 90°C.

Die mechanischen Eigenschaften chemischer Dübel können durch die Umgebungstemperatur beeinträchtigt werden. So kann schon ein Temperaturabfall während der Härtungsreaktion bereits zu einer erheblichen Abnahme der Tragfähigkeit des anschließend ausgehärteten chemischen Dübels führen. Andererseits kann eine Temperaturerhöhung nach der Aushärtung des chemischen Dübels ebenfalls zu einer erheblichen Abnahme der Tragfähigkeit des chemischen Dübels führen

Auch ist der chemische Dübel in seiner Lebenszeit immer wieder schwankenden Temperaturen ausgesetzt. Vor allem das Auftreten erhöhter Temperaturen über einen längeren Zeitraum kann die Tragfähigkeit eines chemischen Dübels beeinträchtigen. Bereits stark schwankende kurzfristige Untergrundtemperaturen, insbesondere aber langfristig erhöhte Untergrundtemperaturen, können sich während der Nutzungsdauer eines chemischen Dübels ungünstig auf dessen Materialeigenschaften auswirken.

Insbesondere kommt es verstärkt zum sogenannten "Kriechen", also zur Verformung eines chemischen Dübels. So kann sich ein chemischer Dübel bei einer erhöhten Untergrundtemperatur von etwa 30°C bis etwa 90°C bereits in einem Zeitraum von wenigen Stunden unter dem Einfluss anhaltender mechanischer Beanspruchungen, wie z. B. Dauerlasten, langsam bewegen oder dauerhaft verformt werden. Die Traglasten verringern sich also.

Da Gebäude in unterschiedlichen Klimazonen starken Temperaturschwankungen ausgesetzt sind, ist es vorteilhaft, wenn die Steifigkeit der Verankerung durch den Mörtel in einem weiten Temperaturbereich konstant hoch bleibt. Auch mit zunehmender Klimaerwärmung ist zukünftig auch in Zonen mit bisher gemäßigtem Klima mit höheren Umgebungstemperaturen im Untergrund infolge starker Sonneneinstrahlung zu rechnen, wodurch sich der Untergrund auf eine Untergrundtemperatur je nach Außentemperatur und Wetterlage auf etwa 40°C oder darüber aufheizen kann. Mehrkomponenten-Harzsysteme, die im Stand der Technik beschrieben sind, zeigen sich diesen Herausforderungen häufig nicht gewachsen.

Um der Kriechneigung von chemischen Dübeln entgegenzuwirken, ist die Entwicklung neuer Mehrkomponenten-Harzsysteme zur Anwendung bei erhöhten Temperaturen, insbesondere von etwa 30°C bis etwa 90°C, wünschenswert. Epoxid-Amin-Systeme mit einer hohen Glasübergangstemperatur werden daher bevorzugt. Eine erhöhte Glasübergangstemperatur führt in der Regel zu höheren Verbundspannungen bei Auszugsversuchen des Dübels bei Temperaturen oberhalb Raumtemperatur.

In Anbetracht der obigen Ausführungen ist es wünschenswert, chemische Dübel, auf Epoxid-Amin-Basis, mit einem weiter verbesserten Kriechverhalten bereitstellen zu können.

Die Aufgabe der Erfindung ist daher, eine einfache und kostengünstige Lösung bereitzustellen, mit der das Kriechverhalten von chemischen Dübeln auf Epoxid-Amin-Basis, weiter verbessert werden kann. Dabei ist es insbesondere Aufgabe der vorliegenden Erfindung das Kriechverhalten von chemischen Dübeln auf Epoxid-Amin-Basis bei erhöhten Temperaturen, insbesondere bei Temperaturen zwischen 40°C und 50°C zu verbessern.

Die der Erfindung zugrundeliegende Aufgabe wird durch die Verwendung mindestens einer Epoxidverbindung mit einer Epoxidfunktionalität von 3 oder größer in einer Epoxidharzmasse in einem gewichtsprozentualen Anteil von ≥ 2,0 Gew.-% bezogen auf das Gesamtgewicht der Epoxidharzmasse gemäß Anspruch 1 gelöst. Bevorzugte Ausführungsformen der erfindungsgemäßen Verwendung sind in den Unteransprüchen angegeben, die wahlweise miteinander kombiniert werden können.

Im Sinne der Erfindung haben die hier und in der nachfolgenden Beschreibung verwendeten Begriffe die folgende Bedeutung:

"*Kriechverhalten*" beschreibt die plastische Verformung, Verschiebung oder Bewegung eines chemischen Dübels infolge anhaltender Lasteinwirkung (Dauerlast).

"*aliphatische Verbindungen*" sind acyclische oder cyclische, gesättigte oder ungesättigte Kohlenstoffverbindungen, ausgenommen aromatische Verbindungen,

"*cycloaliphatische Verbindungen*" sind Verbindungen mit einer carbocyclischen Ringstruktur, ausgenommen Benzolderivate oder andere aromatische Systeme,

"*aromatische Verbindungen*" sind Verbindungen, die der Hückel (4n+2)-Regel folgen, und

"*Amine*" sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)).

Es wurde nunmehr überraschend gefunden, dass die Verwendung von bestimmten Epoxidverbindung mit einer Epoxidfunktionalität von 2 oder größer als Reaktivverdünner in einer Epoxidharzmasse, die eine Epoxidharzkomponente umfasst, in einem gewichtsprozentualen Anteil von ≥ 2,0 Gew.-%, bezogen auf das Gesamtgewicht der Epoxidharzkomponente, zu einer signifikanten Verbesserung des Kriechverhaltens eines aus der Epoxidharzmasse hergestellten chemischen Dübels führt.

Die Epoxidharzmasse ist eine Mehrkomponenten-Epoxidharzmasse, vorzugsweise eine Zweikomponenten-Epoxidharzmasse, die eine Epoxidharzkomponente und eine Härterkomponente umfasst. Die Epoxidharzkomponente umfasst mindestens ein härtbares Epoxidharz. Die Härterkomponente umfasst mindestens ein gegenüber Epoxidgruppen reaktives Amin. In der Mehrkomponenten-Epoxidharzmasse liegen die Epoxidharzkomponente und die Härterkomponente reaktionsinhibierend getrennt voneinander vor.

*Polyfunktionelle Epoxidverbindung*

Die für die erfindungsgemäße Verwendung eingesetzte polyfunktionelle Epoxidverbindung, d.h. eine Epoxidverbindung mit einer Epoxidfunktionalität von 2 oder mehr ist aus der Gruppe ausgewählt bestehend aus Trimethylolethantriglycidylether (TMETGE; Formel I), Trimethylolpropantriglycidylether (TMPTGE; Formel II), Pentaerythritoltetraglycidylether (kommerziell erhältlich unter dem Handelsnamen Erysis® GE40; Formel III), Tetraglycidyl-m-xylylendiamin (kommerziell erhältlich unter dem Handelsnamen Erysis® GE240Formel IV), 1,1'-Methylenbis(2,6-naphthyl)tetraglycidylether (kommerziell erhältlich unter dem Handelsnamen Epiclon® HP-4700; Formel V) und 1,1'-Methylenbis(2-naphthyl)diglycidylether (kommerziell erhältlich unter dem Handelsnamen Epiclon® HP-4770; Formel VI);

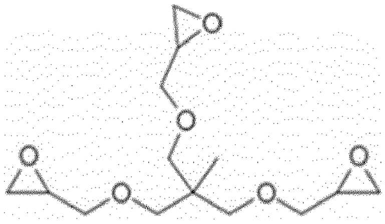
(I),

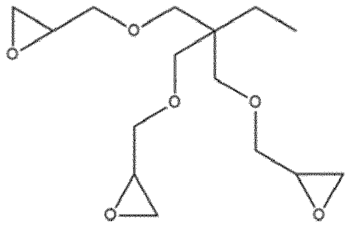
(II),

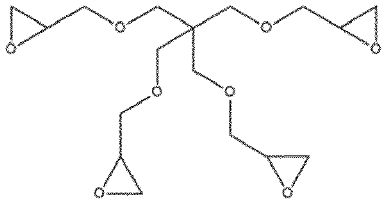
(III),

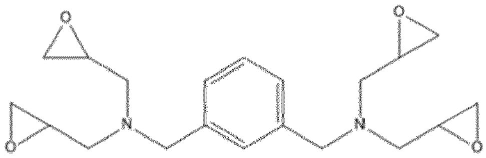
(IV),

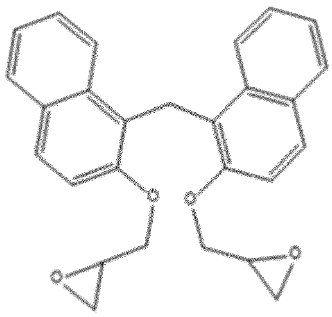
(V),

und

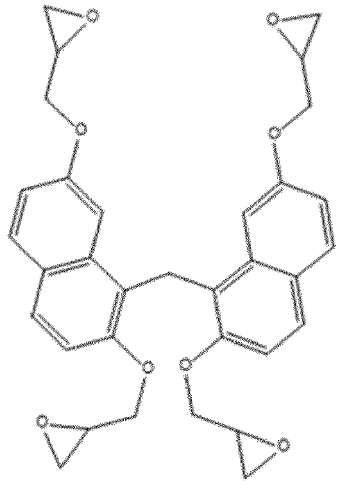

(VI).

Bevorzugt ist die polyfunktionelle Epoxidverbindung ausgewählt aus der Gruppe bestehend aus Tetraglycidyl-m-xylylendiamin (kommerziell erhältlich unter dem Handelsnamen Erysis® GE240; Formel IV), 1,1'-Methylenbis(2,6-naphthyl)tetraglycidylether (kommerziell erhältlich unter dem Handelsnamen Epiclon® HP-4700; Formel V) und 1,1'-Methylenbis(2-naphthyl)diglycidylether (kommerziell erhältlich unter dem Handelsnamen Epiclon® HP-4770; Formel VI).

In einer besonders bevorzugten Ausführungsform wird für die erfindungsgemäße Verwendung zur Verbesserung des Kriechverhaltens eines chemischen Dübels 1,1'-Methylenbis(2,6-naphthyl)tetraglycidylether (kommerziell erhältlich unter dem Handelsnamen Epiclon® HP-4700; Formel V) und 1,1'-Methylenbis(2-naphthyl)diglycidylether (kommerziell erhältlich unter dem Handelsnamen Epiclon® HP-4770; Formel VI) verwendet.

In einer ganz besonders bevorzugten Ausführungsform wird für die erfindungsgemäße Verwendung zur Verbesserung des Kriechverhaltens eines chemischen Dübels 1,1'-Methylenbis(2-naphthyl)diglycidylether (kommerziell erhältlich unter dem Handelsnamen Epiclon® HP-4770; Formel VI) verwendet.

Zur Verbesserung des Kriechverhaltens eines chemischen Dübels ist es erfindungswesentlich, dass in der Epoxidharzmasse die Epoxidverbindung mit einer Epoxidfunktionalität von 2 oder größer in einem gewichtsprozentualen Anteil von mindestens 2,0 Gew.-% (≥ 2,0 Gew.-%), bezogen auf das Gesamtgewicht der Epoxidharzkomponente, verwendet wird.

Vorzugsweise wird die Epoxidverbindung mit einer Epoxidfunktionalität von 2 oder mehr als Reaktivverdünner in der Epoxidharzkomponente einer Mehrkomponenten-Epoxidharzmasse verwendet. Vorzugsweise umfasst die Epoxidharzkomponente ≥ 2,5 Gew.-% der Epoxidverbindung mit einer Epoxidfunktionalität von 2 oder mehr, bezogen auf das Gesamtgewicht der Epoxidharzkomponente. In einer weiter bevorzugten Ausführungsform der Erfindung umfasst die Epoxidharzkomponente 2,5 Gew.-% bis 10,0 Gew.-% der Epoxidverbindung mit einer Epoxidfunktionalität von 2 oder mehr, bezogen auf das Gesamtgewicht der Epoxidharzkomponente.

Die eben beschriebenen polyfunktionellen Epoxidverbindungen können erfindungsgemäß als Reaktivverdünner in einem mehrkomponentigen Befestigungsmörtelsystem eingesetzt werden.

Dementsprechend ist ein weiterer Gegenstand der Erfindung ein mehrkomponentiges Befestigungsmörtelsystem umfassend eine Epoxidharzkomponente (A), enthaltend wenigstens ein härtbares Epoxidharz und wenigstens eine polyfunktionelle Epoxidverbindung als Reaktivverdünner, und eine Härterkomponente (B) enthaltend wenigstens ein gegenüber Epoxidgruppen reaktives Amin, wobei die polyfunktionelle Epoxidverbindung wie oben beschrieben ist.

Die polyfunktionelle Epoxidverbindung sollte, um als Reaktivverdünner zu wirken, eine Viskosität von weniger als 2000 mPas aufweisen, bevorzugt von weniger als 1000 mPas und besonders bevorzugt von weniger als 800 mPas.

*Härtbares Epoxidharz*

Die Epoxidharzkomponente (A) (Komponente (A)) des mehrkomponentiges Befestigungsmörtelsystems der Erfindung umfasst mindestens ein Reaktiv-Kunstharz auf Epoxidharzbasis.

Als härtbares Epoxidharz zur Verwendung in Komponente (A) der vorliegenden Erfindung kommt eine Vielzahl der hierfür dem Fachmann bekannten und kommerziell erhältlichen Verbindungen in Betracht, die im Mittel mehr als eine Epoxid-Gruppe, vorzugsweise zwei Epoxid-Gruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht (EEW) von 120 bis 2000 g/EQ aufweisen, vorzugsweise von 140 bis 400, insbesondere 155 bis 195, beispielsweise 165 bis 185 aufweisen.

Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

In einer weiteren bevorzugten Ausführungsform ist das mindestens eine härtbare Epoxidharz ein Epoxidharz, das aus nachwachsenden Quellen hergestellt wurde. Derartige Epoxidharze aus nachwachsenden Quellen sind beispielsweise Isosorbiddiglycidylether (CAS 13374-44-2), Limonen-1,2:8,9-dioxid (LDO, CAS 96-08-2), Vanillindiglycidylether (DGEVA, CAS 1584677-14-4), Phloroglycinol-triglycidylether (PTHE, CAS 4223-14-7), Vanillinsäure-bisepoxid (CAS 1393710-63-8), und epoxidiertes Pflanzenöl, wie z. B. epoxidiertes Rizinusöl (CAS 105839-17-6, kommerziell erhältlich als Erisys GE 35-H von Huntsman, Belgien) und epoxidiertes Cardanolöl (Mischung enthaltend u.a. CAS 1260636-34-7 und CAS 63284-28-6). Neben Erisys GE 35-H sind Beispiele für kommerziell in größeren Mengen erhältliche bio-basierte Polyepoxide, die im Rahmen der Erfindung eingesetzt werden können, auch Erisys GE 60 und GE 61 (Epoxidharz auf Basis von Sorbitol; Huntsman, Belgien) sowie Araldite DY-S (Epoxidharz auf Basis von Polyglycerin; Huntsman, Belgien).

Geeignete Epoxidharze sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem EEW von 150 bis 300 g/EQ verwendet.

Ein bevorzugtes Beispiel für ein kommerziell erhältliches Bisphenol F-basiertes Epoxidharz, enthaltend Bisphenol-F-diglycidylether, ist Araldite GY 282. Ein Beispiel für ein kommerziell erhältliches Bisphenol A-basiertes Epoxidharz, enthaltend Bisphenol-A-diglycidylether, ist Araldite GY 240.

Der Anteil an Epoxidharz an der Epoxidharzkomponente (A) beträgt >0 bis 95 Gew.-%, bevorzugt 10 bis 70 Gew.-% und besonders bevorzugt 30 bis 60 Gew.-%, bezogen auf das Gesamtgewicht der Epoxidharzkomponente (A).

Der Anteil an trifunktioneller Epoxidverbindung mit einem Epoxidäquivalenzgewicht (EEW) von kleiner 130 g/eq liegt bevorzugt in einer Menge von etwa 5 bis etwa 30 Gew.-% vor, weiter bevorzugt von 5 bis 20 Gew.-% und noch weiter bevorzugt von 10 bis 20 Gew.-%, jeweils bezogen auf das Gesamtgewicht der Epoxidharzkomponente (A).

Der Anteil der Epoxidharzkomponente (A) an der Gesamtmasse des mehrkomponentigen Epoxidharzsystems beträgt vorzugsweise 5 bis 90 Gew.-%, insbesondere 20 bis 80 Gew.-%, 30 bis 70 Gew.-% oder 40 bis 60 Gew.-%.

Neben den Epoxidharzen und den oben beschriebenen polyfunktionellen Epoxidverbindungen kann die Epoxidharzkomponente (A) wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether. Es können auch Mischungen von zwei oder mehr dieser Reaktivverdünner verwendet werden.

Die Reaktivverdünner liegen bevorzugt in einer Menge von 0 bis 60 Gew.-% vor, insbesondere von 1 bis 20 Gew.-%, bezogen auf das Gesamtgewicht der Epoxidharzkomponente (A).

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden.

Härterkomponente (B)

Die Härterkomponente (B) des mehrkomponentiges Befestigungsmörtelsystems umfasst mindestens einen Härter. Der Härter beinhaltet mindestens eine zur Epoxidhärtung gebräuchliche Verbindung (Reaktionspartner bei der Polyaddition). Der Begriff "*Härter*" bedeutet dabei vorzugsweise mindestens eine zur Epoxidhärtung gebräuchliche Verbindung mit oder ohne Füllstoffzusatz und/oder weitere Zusätze, wie Wasser, Verdickungsmittel und/oder weitere Zusatzstoffe, mit anderen Worten, die komplette Härterkomponente. Übliche Zusätze können zugesetzt sein, wie z.B.

Füllstoffe, wie bereits vorstehend im Zusammenhang mit Komponente (A) beschrieben, und/oder (insbesondere zur Herstellung einer Paste oder Emulsion) Lösungsmittel, wie Benzylalkohol und/oder Wasser, wobei Wasser als Reaktionspartner für die Hydrolyse von hydrolysierbare Gruppen beinhaltenden Silane oder Siloxanen dienen kann und vorzugsweise nur enthalten ist, wenn die Härterkomponente (B) ansonsten frei von Silanen oder Siloxanen ist. Die weiteren Zusätze der Härterkomponente eines erfindungsgemäßen Befestigungsmörtelsystems auf Epoxidbasis können beispielsweise in einem Gewichtanteil von insgesamt 0,01 bis 70 Gew.-%, z.B. von 1 bis 40 Gew.-% bezogen auf die Härterkomponente (B) vorgesehen sein.

Bei den zur Epoxidhärtung gebräuchlichen Verbindungen (die als Reaktionspartner bei der Polyaddition fungieren) handelt es sich insbesondere um solche mit zwei oder mehr Gruppen, ausgewählt aus Amino, Imino, und Mercapto, beispielsweise entsprechende Amine, Thiole, oder Aminothiole, oder Gemische davon, beispielsweise wie in Lee Hand Neville K, "Handbook of Epoxy Resins" (New. York: McGraw-Hill), 1982, genannt.

Die zur Epoxidhärtung (allgemein) gebräuchlichen Verbindungen umfassen beispielsweise in einer Ausführungsform der Erfindung Di- oder Polyamine wie insbesondere aliphatische, heteroaliphatische, cycloaliphatische, cycloheteroaliphatische und aromatische Di- oder Polyamine, Amidoamine, Aminaddukte (z.B.: Bucherer-Addukte wie in der Druckschrift EP 0 824 124 offenbart), Polyetherdiamine, Polyphenyl/Polymethylen-polyamine oder Mannichbasen.

Gemäß der vorliegenden Erfindung werden bevorzugt Diamine, Polyamine oder Mannichbasen in der Härterkomponente (B) verwendet.

Beispiele für besonders geeignete Di- oder Polyamine sind 1,2-Diaminoethan (Ethylendiamin), 1,2-Propandiamin, 1,3-Propandiamin, 1,4-Diaminobutan, 2,2-Dimethyl-1, 3-propandiamin (Neopentandiamin), Diethylaminopropylamin (DEAPA), 2-Methyl-1,5-pentamethylendiamin (Dytek A), 1,3-Diaminopentan, 2,2,4- oder 2,4,4-Trimethyl-1, 6-diaminohexan und Gemische davon (TMD), 1,2-Bis(aminomethyl)cyclohexan, Hexamethylendiamin (HMD), 1,4-Diaminocyclohexan (1,4-DACH), Bis(4-amino-3-methylcyclohexyl)methan, Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, 3-Aminomethyl-3,5,5-trimethylcyclohexan (IPDA), 1,3-Cyclohexandimethanamin (1,3-BAC), Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.02,6]decan (Isomerengemisch, tricyclischer primärer Amine; TCD-Diamin), Methylcyclohexyl-diamin (Baxxodur EC 210, MDACH), N,N'-Diaminopropyl-2-methylcyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin.

Bevorzugte Polyamine sind mXDA, Dytek A, TMD, IPDA, 1,3-BAC und MDACH.

Bei den erfindungsgemäß einzusetzenden Mannichbasen handelt es sich um die Reaktionsprodukte von Phenolen, wie Phenol, Brenzcatechin, Resorcin, Hydrochinon, Hydroxyhydrochinon, Phloroglucin, Pyrogallol, o-Kresol, m-Kresol, p-Kresol, oder Bisphenolen, wie Bisphenol F oder Bisphenol A, insbesondere Phenol, oder von styrolisierten Phenolen, wie nachfolgend definiert, mit den vorstehend definierten Di- oder Polyaminen und Aldehyden oder durch Zersetzung Aldehyde liefernde Verbindungen, vor allem aliphatischen Aldehyden, wie insbesondere Formaldehyd (wobei dieser Begriff auch und durch Zersetzung Formaldehyd liefernde Verbindungen wie Trioxan oder Paraformaldehyd einschließen kann), wobei die Aldehyde vorteilhaft als wässrige Lösung (insbesondere bei erhöhter Temperatur, wie bei 50 bis 90 °C) zu- und umgesetzt werden.

Die Herstellung der Mannichbasen kann erfindungsgemäß nach an sich bekannten Verfahren erfolgen, unter Verwendung der oben definierten geeigneten Amine. Beispielsweise kann sie, z.B. unter Verwendung der genannten Amine, wie folgt durchgeführt werden (die konkreten Angaben (gekennzeichnet durch "*z.B.*" und "*beispielsweise*") beziehen sich auf die in den Beispielen verwendeten Mannichbasen):

Ein Amin (z.B. 2 mol) wird (beispielsweise in einem 250 ml-Dreihalskolben, welcher mit einem Thermometer, einem Tropftrichter und einer Rührvorrichtung versehen ist) vorgelegt. Unter Rühren wird das vorgelegte Amin mit (z.B. 1 mol) Phenol bzw. styrolisiertem Phenol versetzt. Es wird aufgeheizt (z.B. auf 80 °C). Bei der erreichten Temperatur wird (z.B. innerhalb 45 min) Formaldehyd zugetropft (z.B. 0,7 mol als 37%ige Formaldehydlösung), insbesondere unter starkem Rühren. Nach Ende der Zugabe wird weiter aufgeheizt (beispielsweise auf 105 °C) und die Reaktionsbedingungen für einige Zeit (z.B. 120 min) gehalten. Anschließend wird - beispielsweise unter steigendem Vakuum - bei geeigneter Temperatur (z.B. ca. 110 °C) Wasser abdestilliert, wobei, sobald der Druck stark genug vermindert ist (z.B. auf 50 mbar), die Temperatur weiter erhöht wird (z.B. auf 130 °C) und dann eine Zeitlang (z.B. 60 min) gehalten wird.

Der Anteil aller gegenüber Epoxidgruppen reaktiven Amine (Diamine, Polyamine oder Mannichbasen) in der Härterzusammensetzung (B) beträgt vorzugsweise von 30 bis 98 Gew.-%, bevorzugt von 40 bis 80 Gew.-%, bezogen auf

das Gesamtgewicht der Härterzusammensetzung (B).

In einer vorteilhaften Ausführungsform weist die Härterkomponente (B) einen AHEW (Amine Hydrogen Equivalent Weight) von 20 bis 1000 g/EQ auf, bevorzugt von 30 bis 500 g/EQ, bevorzugter von 40 bis 350 g/EQ, noch bevorzugter von 50 bis 225 g/EQ und besonders bevorzugt von 50 bis 150 g/EQ.

Für ein einfaches Amin sei die Errechnung des AHEW am Beispiel von meta-Xylylendiamin rein exemplarisch erläutert:

Allgemeine Formel:

$$H - \ddot{A}q. = Mw \frac{Mw}{Funktionalit\ddot{a}t}$$

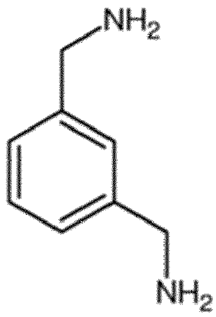

eingesetzt:

$$H - \ddot{A}q. = \frac{136}{4} \left[\frac{g}{eq}\right] = 34 \left[\frac{g}{eq}\right]$$

Experimentell kann der AHEW-Wert durch Bestimmung der Glasübergangstemperatur (Tg) einer Mischung aus Epoxidharz (mit bekanntem EEW) und Aminkomponente erhalten werden. Es werden dabei die Glasübergangstemperaturen von Epoxidharz/Amin-Mischungen mit unterschiedlichen Verhältnissen bestimmt. Die Probe wird mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("*Tg2*") besitzt das optimale Verhältnis von Epoxidharz und Amin. Aus dem bekannten EEW und dem optimalen Epoxidharz/Amin-Verhältnis lässt sich der AHEW-Wert ebenfalls berechnen.

Beispiel: EEW = 158 g/mol

Mischung Amin/Epoxidharz mit maximaler Tg2: 1 g Amin mit 4,65 g Epoxidharz

AHEW (Amin) = 1*158/4,65 = 33,9785

Als weiterer Bestandteil sind typischerweise Beschleuniger in der Härterkomponente (B) vorhanden. Der Anteil des zugesetzten Beschleunigers hängt vom jeweiligen Beschleuniger, von der für die Anwendung nötigen Aushärtezeit und von den eingesetzten Aminen ab. So beschleunigen Triflate am stärksten, gefolgt von Nitraten und Thiocyanaten. Iodide beschleunigen etwas schwächer. Aufgrund der starken Beschleunigungswirkung der anorganischen Salze sind Konzentrationen zwischen 1 und 10 % ausreichend, um nach 24 Stunden eine zufriedenstellende Aushärtung zu erreichen. Weitere bekannte Beschleuniger sind Novolake (einschließlich Bisphenole), styrolisiertes Phenol, para-Toluolsulfonsäure, und Salicylsäure. Diese Beschleuniger können auch kombiniert werden, bekannte Kombinationen sind z. B. Novolak und anorganisches Salz, Novolak und styrolisiertes Phenol, Bisphenol F und p-Toluolsulfonsäure oder styrolisiertes Phenol und Salicylsäure.

Ein Polyphenol (Novolak) wird dargestellt durch die allgemeine Formel (I) oder ein Copolymer verschiedener Alkylphenol- oder Aralkylphenol-Einheiten,

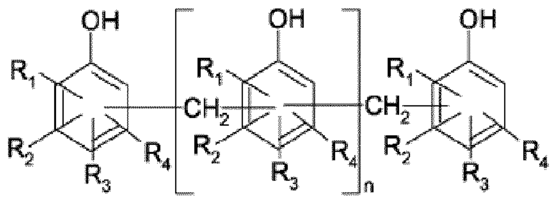

(I)

,

wobei in Formel (I) $R_1$, $R_2$, $R_3$, $R_4$, jeweils unabhängig voneinander H, verzweigte oder unverzweigte Alkyl-Radikale, oder verzweigte oder unverzweigte Aralkyl-Radikale, enthaltend 1 bis 15 Kohlenstoffatome, darstellen; n beträgt 0 bis 15.

Bevorzugte Novolakharze sind solche, bei denen in Formel (I) $R_1$, $R_2$, $R_3$ und $R_4$ entweder Wasserstoff sind, oder eines oder zwei der Radikale $R_1$ bis $R_4$ das Radikal $CH_3$ ist/sind, oder eines der Radikale $R_1$ bis $R_4$ das tert.-Butylradikal oder ein unverzweigtes oder verzweigtes $C_1$-$C_{15}$-Alkylradikal ist. Bevorzugte Novolakharze sind weiterhin solche mit n zwischen 1 und 15.

Als Co-Beschleuniger kann die Härterkomponente (B) außerdem 2,4,6-Tris(dimethylaminomethyl)phenol (z. B. Ancamine K54, Air Products, NL) oder Benzylalkohol enthalten.

Weitere Bestandteile des mehrkomponentigen Befestigungsmörtelsystems

Sowohl die Epoxidharzkomponente (A), als auch die Härterkomponente (B), als auch beide Komponenten (A) und (B) umfassen typischerweise neben dem härtbaren Epoxidharz bzw. dem Härtungsmittel mindestens einen weiteren Bestandteil. Weitere übliche Bestandteile sind insbesondere Füllstoffe, Rheologieadditive (Thixotropiermittel), Haftvermittler und Lösemittel.

Je nach gewünschter Wirkung eines weiteren Bestandteils kann es bevorzugt sein, dass der mindestens eine weitere Bestandteil nur in der Epoxidharzkomponente (A), nur in der Härterkomponente (B), oder in beiden Komponenten enthalten ist.

Durch den Einsatz eines Haftvermittlers wird die Vernetzung der Bohrlochwand mit der Mörtelmasse verbessert, so dass sich die Haftung im ausgehärteten Zustand erhöht.

Geeignete Haftvermittler für die Epoxidharzkomponente (A) sind aus der Gruppe der Silane ausgewählt, die mindestens eine Si-gebundene hydrolisierbare Gruppe aufweisen, wie beispielsweise 3-Glycidyloxypropyltrialkoxysilan, wie 3-Glycidyloxypropyltrimethoxysilan (GLYMO) oder -ethoxysilan, Glycidyloxymethyltrialkoxysilan, wie Glycidyloxymethyltrimethoxysilan oder Glycidyloxymethyltriethoxysilan, 3-Glycidyloxypropylmethyldi-alkoxysilan, wie 3-Glycidyloxypropylmethyldi-methoxysilan oder 3-Glycidyloxypropylmethyldi-ethoxysilan, 2-(3,4-Epoxycyclohexyl)ethyltrimethoxysilan und/oder Tetraalkoxysilan, wie Tetramethoxysilan, Tetraethoxysilan oder Tetrapropoxysilan, oder einem Gemisch von zwei oder mehreren davon. Besonders bevorzugt als Silan (S) ist beispielsweise 3-Glycidyloxypropyltrimethoxysilan, z.B. Dynasylan GLYMO von Evonik Industries, Deutschland.

Der Haftvermittler kann in einer Menge bis zu 6 Gew.-%, bevorzugt 0,1 bis 4 Gew.-%, weiter bevorzugt 2,0 bis 3,5 Gew.-% bezogen auf das Gesamtgewicht der Härterkomponente (A) enthalten sein.

Geeignete Haftvermittler für die Härterkomponente (B) sind aus der Gruppe der Silane ausgewählt, die mindestens eine Si-gebundene hydrolisierbare Gruppe aufweisen, wie beispielsweise, N-2-(Aminoethyl)-3-aminopropylmethyl-diethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt. Weitere Silane sind beispielsweise in der EP3000792 A1 beschrieben.

Der Haftvermittler kann in einer Menge bis zu 10 Gew.-%, bevorzugt 0,1 bis 8 Gew.-%, weiter bevorzugt 2,0 bis 6 Gew.-% bezogen auf das Gesamtgewicht der Härterkomponente (B) enthalten sein.

Des Weiteren können die Epoxidharzkomponente (A) und die Härterkomponente (B) übliche Zusätze enthalten, insbesondere Füllstoffe oder Thixotropiermittel (Verdicker).

Als Füllstoffe dienen bevorzugt anorganische Füllstoffe, insbesondere Quarz, Aluminiumoxide, Glas, Korund, Porzellan, Steingut, Schwerspat, Leichtspat, Gips, Talkum, Zemente (wie Portlandzement oder Aluminatzement), und/oder Kreide sowie deren Mischungen. Die anorganischen Füllstoffe können in Form von Partikeln (beispielsweise in Form von Pulvern, Sanden, oder Mehlen) oder Formkörpern (letzteres vorzugsweise in Form von Fasern oder Kugeln), zugesetzt werden. Durch eine geeignete Auswahl der Füllstoffe hinsichtlich Art und Partikelgrößenverteilung, Partikelgröße oder (Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

Als Füllstoffe kommen insbesondere nicht oberflächenbehandelte Quarzmehle, Feinquarzmehle und Feinstquarzmehle, wie beispielsweise Millisil® W3, Millisil® W6, Millisil® W8 und Millisil® W12, bevorzugt Millisil® W12, in Frage.

Ferner können silanisierte Quarzmehle, Feinquarzmehle und Feinstquarzmehl eingesetzt werden. Diese sind beispielsweise käuflich als Produktserie Silbond der Firma Quarzwerke erhältlich. Hierbei sind die Produktserien Silbond® EST (Epoxysilan-behandelt) und Silbond® AST 25 (Aminosilan-behandelt) besonders bevorzugt. Ferner können Aluminiumoxid-basierte Füllstoffe wie beispielsweise Aluminiumoxidfeinstfüller vom Typ ASFP der Firma Denka, Japan, ($d_{50}$ = 0,3 $\mu$m) oder Qualitäten wie DAW oder DAM mit den Typenbezeichnungen 45 ($d_{50}$ < 0,44 $\mu$m), 07 ($d_{50}$ > 8,4 $\mu$m), 05 ($d_{50}$ < 5,5 $\mu$m), 03 ($d_{50}$ < 4,1 $\mu$m) eingesetzt werden. Weiterhin können die oberflächenbehandelten Fein- und Feinstfüllstoffe vom Typ Aktisil AM 30 (Aminosilan-behandelt, $d_{50}$ = 2,2 $\mu$m) und Aktisil EM (Epoxysilan-behandelt, $d_{50}$=2,2 $\mu$m) von Hoffman Mineral verwendet werden. Die Füllstoffe können einzeln oder auch in beliebiger Mischung untereinander verwendet werden. Besonders bevorzugt ist nicht oberflächenbehandeltes Quarzmehl, insbesondere Millisil® W12.

Als Füllstoffe können insbesondere nicht oberflächenbehandelte Quarzmehle und/oder Tonerde eingesetzt werden. Bevorzugt sind Füllstoffe mit einem Mittelkorn $d_{50}$ von <50 $\mu$m, besonders bevorzugt Füllstoffe mit einem Mittelkorn $d_{50}$ von <20 $\mu$m.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 60 Gew.-%, noch weiter bevorzugt 30 bis 55 Gew.-%, bezogen auf das Gesamtgewicht der Epoxidharzkomponente (A) bzw. der Härterkomponente (B).

Weitere denkbare Zusätze zur Epoxidharzkomponente (A) und der Härterkomponente (B) sind ferner Thixotropiermittel, wie gegebenenfalls organisch nachbehandelte pyrogene Kieselsäure, Bentonite, Cellulose, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Ferner können Lösemittel in dem Zwei-Komponenten-Harzsystem eingesetzt werden, um beispielsweise Aushärtezeiten gezielt zu verlangsamen oder die Gelzeit zu verändern. Bevorzugte Lösemittel können einwertige, zweiwertige oder mehrwertige Alkohole umfassen, bevorzugt einen zweiwertigen Alkohol. Unter einem mehrwertigen Alkohol wird hier ein drei- oder höherwertiger Alkohol verstanden. Stark bevorzugt kann die Komponenten (A) oder (B) einen zweiwertigen Alkohol, insbesondere Dipropylenglycol, umfassen. Alternativ stark bevorzugt kann die Komponente (A) oder (B) Benzylalkohol umfassen.

Zur Optimierung können weiterhin Netz- und Dispergiermittel, Phlegmatisiermittel, Oberflächenadditive, Weichmacher wie Phthalsäure- oder Sebacinsäureester, Wachsadditive, Stabilisatoren, Antistatikmittel, Flexibilisatoren, Härtungskatalysatoren, weitere Steuerungsmittel für die Reaktionsgeschwindigkeit, Entschäumer & Entlüfter, Viskositätsreduzierer oder sonstige Prozessadditive zugesetzt werden.

Ebenso denkbar sind färbende Zusätze wie Farbstoffe oder Pigmente, beispielsweise zum unterschiedlichen Anfärben der Komponenten zur besseren Kontrolle von deren Durchmischung.

Verwendung

Die Epoxidharzmasse wird zur Herstellung von chemischen Dübeln verwendet, welche üblicherweise für Bauzwecke eingesetzt werden. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz.

Die Mehrkomponenten-Epoxidharzmasse liegt vorzugsweise in Patronen, Kartuschen oder Folienbeuteln vor, die zwei oder mehrere voneinander getrennte Kammern umfassen, in welchen die Epoxidharzkomponente (A) und die Härterkomponente (B) der Mörtelmasse reaktionsinhibierend voneinander getrennt angeordnet sind.

Bei der bestimmungsgemäßen Anwendung werden die Epoxidharzkomponente (A) und die Härterkomponente (B) aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente (B) reagieren mit den Epoxidharzen der Epoxidharzkomponente (A) unter Polyaddition, sodass die Epoxidharzmasse unter Umgebungsbedingungen innerhalb einer gewünschten Zeit, vorzugsweise innerhalb weniger Minuten oder Stunden, aushärtet.

Die Epoxidharzkomponente (A) und die Härterkomponente (B) werden bevorzugt in einem Verhältnis gemischt, das entsprechend der EEW- und AHEW-Werte eine ausgeglichene Stöchiometrie ergibt.

Der AHEW-Wert (amine hydrogen equivalent weight, H-Äquivalent) gibt die Menge der Härterkomponente an, die 1 mol reaktives H enthält. Der EEW-Wert (epoxide equivalent weight, Epoxidäquivalentwerte) werden in der Regel von den Herstellern der jeweils verwendeten Epoxidharzkomponenten angegeben oder sie werden nach bekannten Methoden berechnet. Die EEW geben die Menge in g Epoxidharz an, die 1 Mol Epoxidgruppen enthält.

Experimentell wurde die AHEW durch Bestimmung der Glasübergangstemperatur (Tg) einer Mischung aus Epoxidharz (mit bekanntem EEW) und Aminkomponente erhalten. Es wurden dabei die Glasübergangstemperaturen von Epoxidharz/Amin-Mischungen mit unterschiedlichen Verhältnissen bestimmt. Die Probe wurde mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("$Tg_2$") besitzt das optimale Verhältnis von Epoxidharz und Amin. Aus dem bekannten EEW und dem optimalen Epoxidharz/Amin-Verhältnis lässt sich der AHEW-Wert berechnen.

**Kurzbeschreibung der Figuren**

Fig. 1 zeigt das Kriechverhalten der Beispiele 1 und 2 im Vergleich zum Kriechverhalten des Vergleichsbeispiels 1;

Fig. 2 zeigt das Kriechverhalten der Beispiele 3 bis 5 im Vergleich zum Kriechverhalten des Vergleichsbeispiels 2;

Fig. 3 zeigt das Kriechverhalten der Beispiele 4 bis 9 im Vergleich zu den Vergleichsbeispielen 2 bis 4, wobei nur die Werte für die Verschiebung nach 160 Stunden angegeben sind.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

**AUSFÜHRUNGSBEISPIELE**

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

**Tabelle 1:** Liste der in den Beispielen und Referenzen verwendeten Bestandteile (Erklärung der Abkürzungen) sowie ihrer Handelsnamen und Bezugsquellen

| Funktion | Handelsname | Chemische Spezifikation | Hersteller |
|---|---|---|---|
| Epoxidharz | Araldite® GY 240 | Bisphenol-A basiertes Epoxidharz | Huntsman Advanced Materials, Deutschland |
| Reaktivverdünner | Araldite® DY-026 | 1,4-Butandiol-diglycidylether (BDDGE) | Huntsman Advanced Materials, Deutschland |
| Reaktivverdünner | Araldite® DY-T-CH | Trimethyolpropantriglycidylether (TMPTGE) | Huntsman Advanced Materials, Deutschland |
| Reaktivverdünner | Erisys® GE 40 | Pentaerythritoltetraglycidylether | Huntsman Advanced Materials, Deutschland |
| Reaktivverdünner | Erysis® GA 240 | Tetraglycidyl-m-xylylendiamin | Huntsman Advanced Materials, Deutschland |
| Reaktivverdünner | Epidon® HP-4700 | 1,1'-Methylenbis(2,6-naphthyl)tetraglycidylether | DIC Europe GmbH, Germany |
| Reaktivverdünner | Epidon® HP-4770 | 1,1'-Methylenbis(2-naphthyl)diglycidylether | DIC Europe GmbH, Germany |
| Haftvermittler | Glymo | (3-glycidyloxypropyl) trimethoxysilane | Evonik Resource Efficiency, Deutschland |

(fortgesetzt)

| Funktion | Handelsname | Chemische Spezifikation | Hersteller |
|---|---|---|---|
| Füllstoff | Millisil® W1 2 | Quarzmehl, mittlere Partikelgröße $d_{50}$ = 16 µm | Quarzwerke, Deutschland |
| Verdicker | CabOSil® TS 720 | Pyrogene Kieselsäure | Cabot corporation, Deutschland |
| Amin | mXDA | m-Xylylenediamine | MGC, Japan |
| Beschleuniger | Calciumnitrat | $Ca(NO_3)_2\ 4H_2O$ | Sigma Aldrich, Deutschland |
| Lösungsmittel | Glycerin | 1,2,3-propanetriol | Merck, Deutschland |

Zur Herstellung der Epoxidharzkomponenten (A) gemäß Tabelle 2 und Tabelle 3 wurden die flüssigen Komponenten mit Hilfe eines Holzspachtels per Hand vorgemischt. Anschließend wurden die Füllstoffe und Verdicker hinzugegeben und zunächst per Hand vorgemischt. Die Mischung wurde anschließend in einem Dissolver (PC Laborsystem, Volumen 1L) für 8,5 Minuten unter 80 mbar Unterdruck bei 3500 U/min gerührt.

Zur Herstellung der Härterkomponenten (B) gemäß Tabelle 2 und Tabelle 2 wurden das Amin vorgelegt und der Beschleuniger bzw. das Beschleunigergemisch in dem Amin gelöst. Anschließend wurden Füllstoff und Verdicker zugegeben und per Hand vorgemischt. Die Mischung wurde anschließend in einem Dissolver (PC Laborsystem, Volumen 1L) für 8,5 Minuten unter 80 mbar Unterdruck bei 3500 U/min gerührt.

Der Beschleuniger $Ca(NO_3)_2$ wurde als Lösung in Glycerin (1,2,3-Propantriol) eingesetzt. Zur Herstellung der Calciumnitrat- Lösung wurden 400,0 g Calciumnitrat-Tetrahydrat zu 100,0 g Glycerin gegeben und bei 50 °C bis zur vollständigen Lösung (3 Stunden) gerührt. Die so hergestellte Lösung enthielt 80,0 % Calciumnitrat-Tetrahydrat.

Zur Herstellung der Mörtelmassen wurden die Epoxidharzkomponente (A) und die Härterkomponente (B) gemäß den Beispielen in Tabelle 2 und Tabelle 3 in Hartkartuschen mit einem Mischungsverhältnis von 3:1 abgefüllt. Die Hartkartuschen wurden mit einem statischen Mischer (Quadro-Mischer) versehen und mittels eines Dispensers ausgepresst. Die ersten drei Hübe der ausgepressten Mörtelmassen wurden verworfen, um die richtige Mischqualität vor der Injektion in das Bohrloch zu gewährleisten.

Zur Bestimmung des Kriechverhaltens wurden Dauerbelastungsversuche bei maximaler Temperaturleistung in Anlehnung an die Beschreibung in der Leitlinie ETAG 001 Teil 5 (Leitlinie für die europäische technische Zulassung für Metalldübel zur Verwendung in Beton), ersetzt durch EAD 330499-00-0601, durchgeführt. Hierzu wurden die durch Mischen der Epoxidharzkomponente (A) und der Härterkomponente (B) gemäß den (Tabelle 2 und Tabelle 3) erhaltenen Mörtelmassen in 14 mm gereinigte (2x Druckluft 6 bar, 2x gebürstet und 2x Druckluft 6 bar) Bohrlöcher in stahlummantelte Betonzylinder (C20/25) mit 72 mm Einbindetiefe eingebaut. Nach einer Aushärtungszeit von 24 Stunden wurden die Versuche gestartet und für 6 Tage durchgeführt. Die Versuche wurden bei einer Temperatur von 43 °C (Mörtelmassen aus Tabelle 2) bzw. 50°C (Mörtelmassen aus Tabelle 3) durchgeführt.

Bei den Dauerbelastungsversuchen wurde jeweils eine Dauerlast von 29 kN angelegt und M12×72 Gewindeankerstangen verwendet. Zu Beginn der Versuche wurden Messdaten mit einer hohen Frequenz aufgenommen (in der ersten Stunde 10 Messungen/min), anschließend 1 Messung pro Stunde.

Die Ergebnisse sind in den Figuren 1 bis 3 dargestellt.

**Tabelle 2:** *Zusammensetzung der Epoxidharzkomponenten (A) und der Härterkomponenten (B) sowie der daraus resultierenden Mörtelmasse gemäß Beispiel 1 bis 5 (erfindungsgemäße Verwendung) sowie der Mörtelmasse gemäß Vergleichsbeispiel 1 und 2 (nicht erfindungsgemäß) [in Gew.-%]*

| | | Vergleichs-beispiel 1 | Beispiel 1 | Beispiel 2 | Vergleichs-beispiel 2 | Beispiel 3 | Beispiel 4 | Beispiel 5 |
|---|---|---|---|---|---|---|---|---|
| Epoxidharzkomponente A | Araldite® GY 240 | 53,7 | 53,7 | 53,7 | 53,7 | 53,7 | 53,7 | 53,7 |
| | Araldite® DY-026 | 23,25 | 13,25 | 13,25 | 13,25 | 13,25 | 13,25 | 13,25 |
| | Araldite® DY-T-CH | | 10 | | | | | |
| | Erisys® GE 40 | | | 10 | | | | |
| | Erysis® GA 240 | | | | | 10 | | |
| | Epiclon® HP-4700 | | | | | | 10 | |
| | Epiclon® HP-4770 | | | | | | | 10 |
| | Millisil® W12 | 20,4 | 20,4 | 20,4 | 20,4 | 20,4 | 20,4 | 20,4 |
| | Cab-o-Sil® 720 | 2,65 | 2,65 | 2,65 | 2,65 | 2,65 | 2,65 | 2,65 |
| | **EEQ / g/eq** | **198** | **201** | **210** | **212** | **240** | **209** | **215** |
| Härterkomponente B | | | | | | | | |
| | mXDA | 43,4 | 43,4 | 43,4 | 43,4 | 43,4 | 43,4 | 43,4 |
| | Millisil® W12 | 50,7 | 50,7 | 50,7 | 50,7 | 50,7 | 50,7 | 50,7 |
| | Cab-o-Sil® 720 | 4 | 4 | 4 | 4 | 4 | 4 | 4 |
| | $Ca(NO_3)_2$ (80% in Glycerin) | 1,9 | 1,9 | 1,9 | 1,9 | 1,9 | 1,9 | 1,9 |
| | **AHEQ / g/eq** | 78 | 78 | 78 | 78 | 78 | 78 | 78 |
| | | | | | | | | |

**Tabelle 3:** *Zusammensetzung der Epoxidharzkomponenten (A) und der Härterkomponenten (B) sowie der daraus resultierenden Mörtelmasse gemäß Beispiel 6 bis 9 (erfindungsgemäße Verwendung) sowie der Mörtelmasse gemäß Vergleichsbeispiel 3 und 7 (nicht erfindungsgemäß) [in Gew.-%]*

| | | **Vergleichs-beispiel 3** | **Beispiel 6** | **Beispiel 7** | **Vergleichs-beispiel 4** | **Beispiel 8** | **Beispiel 9** |
|---|---|---|---|---|---|---|---|
| **Epoxidharzkomponente A** | Araldite® GY 240 | 53,7 | 53,7 | 53,7 | 53,7 | 53,7 | 53,7 |
| | Araldite® DY-026 | 23,25 | 18,25 | 18,25 | 23,25 | 20,75 | 20,75 |
| | Araldite® DY-T-CH | | | | | | |
| | Epiclon® HP-4700 | | 5,0 | | | 2,5 | |
| | Epiclon® HP-4770 | | | 5,0 | | | 2,5 |
| | Millisil® W12 | 20,4 | 20,4 | 20,4 | 20,4 | 20,4 | 20,4 |
| | Cab-o-Sil® 720 | 2,65 | 2,65 | 2,65 | 2,65 | 2,65 | 2,65 |
| | **EEQ / g/eq** | **198** | **201** | **210** | **212** | **240** | **209** |
| **Härterkomponente B** | | | | | | | |
| | mXDA | 43,4 | 43,4 | 43,4 | 43,4 | 43,4 | 43,4 |
| | Millisil® W12 | 50,7 | 50,7 | 50,7 | 50,7 | 50,7 | 50,7 |
| | Cab-o-Sil® 720 | 4,0 | 4,0 | 4,0 | 4,0 | 4,0 | 4,0 |
| | $Ca(NO_3)_2$ (80% in Glycerin) | 1,9 | 1,9 | 1,9 | 1,9 | 1,9 | 1,9 |
| | **AHEQ / g/eq** | 78 | 78 | 78 | 78 | 78 | 78 |
| | | | | | | | |

In einem ersten Schritt wurde der difunktionelle Reaktivverdünner BDDGE in Vergleichsbeispiel 1 (Tabelle 1) durch polyfunktioinelle Epoxidverbindungen TMPTGE und Erisys® GA40 ersetzt (Beispiele 1 bzw. 2, Tabelle 1). In einem zweiten Schritt wurde eine zweite Vergleichsformulierung (Vergleichsbeispiel 2, Tabelle 1) hergestellt, die mehr Basisharz

(DGEBA) enthält, und mit Formulierungen, die verschiedene polyfunktionale Epoxidharze mit zwei oder mehr Epoxidgruppen enthalten (Beispiele 3-5, Tabelle 1), verglichen. Die Struktur dieser Verbindungen ist in Abbildung 1 dargestellt.

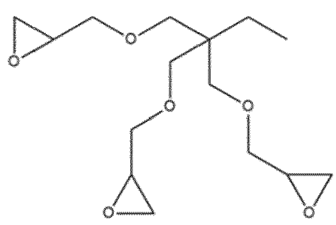

TMPTGE

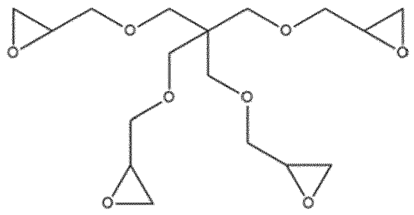

Erysis® GA 40

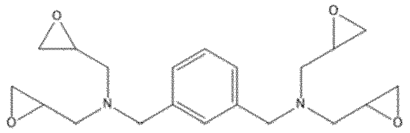

Erysis® GA 240

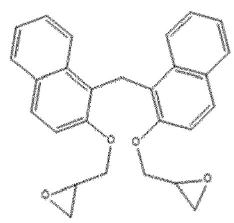

Epiclon® HP-4770

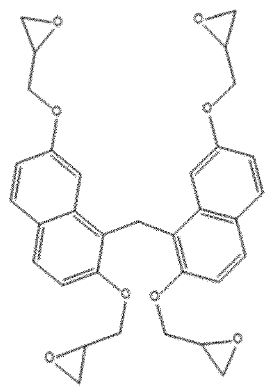

Epiclon® HP-4700

**Abbildung 1**: Chemische Strukturen der verwendeten polyfunktionellen Epoxidverbindungen

Um zu überprüfen, ob Formulierungen, die einen geringeren Prozentsatz der polyfunktionalen aromatischen Epoxidharze enthielten, im Kriechverhalten eine Konzentrationsabhängigkeit aufwiesen, wurde das Kriechverhalten an Formulierungen untersucht, die unterschiedliche Konzentration an polyfunktioneller Epoxidverbindung enthalten (vgl. Tabelle 3).

Die Ergebnisse zeigen, dass bei Verwendung einer aromatischen polyfunktionellen Epoxidverbindung in einer Konzentrationen von 2,5 Gew.-% ein Optimum erreicht wurde.

Es wird deutlich, dass sich für die Formulierungen, die polyfunktionelle Epoxidverbindungen enthalten, das Kriechverhalten verbessert. Besonders stark ist dieser Effekt bei den Formulierungen, die aromatische polyfunktionellen Epoxidverbindungen enthalten.

**Patentansprüche**

1. Verwendung mindestens einer Epoxidverbindung ausgewählt aus der Gruppe bestehend aus Trimethylolethantriglycidylether, Trimethylolpropantriglycidylether, Pentaerythritoltetraglycidylether, Tetraglycidyl-m-xylylendiamin, 1,1'-Methylenbis(2,6-naphthyl)tetraglycidylether und 1,1'-Methylenbis(2-naphthyl)diglycidylether und einer Kombination davon als Reaktivverdünner in einer Epoxidharzmasse, die eine Epoxidharzkomponente umfasst, in einem gewichtsprozentualen Anteil von ≥ 2,0 Gew.-%, bezogen auf das Gesamtgewicht der Epoxidharzkomponente, zur

Verbesserung des Kriechverhaltens eines aus der Epoxidharzmasse hergestellten chemischen Dübels.

2. Verwendung gemäß Anspruch 1, **dadurch gekennzeichnet, dass** die Epoxidharzmasse eine Mehrkomponenten-Zusammensetzung ist, welche die mindestens eine Epoxidharzkomponente umfasst, die wenigstens ein härtbares Epoxidharz enthält, und mindestens eine Härterkomponente umfasst, die mindestens ein gegenüber Epoxidgruppen reaktives Amin enthält, wobei die Epoxidharzkomponente und die Härterkomponente reaktionsinhibierend getrennt voneinander vorliegen.

3. Verwendung gemäß Anspruch 2, **dadurch gekennzeichnet, dass** die Epoxidharzkomponente ≥ 2,0 Gew.-% der Epoxidverbindung bezogen auf das Gesamtgewicht der Epoxidharzkomponente umfasst.

4. Verwendung gemäß Anspruch 3, **dadurch gekennzeichnet, dass** die Epoxidharzkomponente ≥ 2,5 Gew.-% der Epoxidverbindung bezogen auf das Gesamtgewicht der Epoxidharzkomponente umfasst.

5. Verwendung gemäß Anspruch 4, **dadurch gekennzeichnet, dass** der gewichtsprozentuale Anteil der Epoxidverbindung 2,5 bis 10,0 Gew.-% bezogen auf das Gesamtgewicht der Epoxidharzkomponente beträgt.

6. Verwendung gemäß einem der vorhergehenden Ansprüche, **dadurch gekennzeichnet, dass** die Epoxidverbindung aus der Gruppe bestehend aus Tetraglycidyl-m-xylylendiamin, 1,1'-Methylenbis(2,6-naphthyl)tetraglycidylether und 1,1'-Methylenbis(2-naphthyl)diglycidylether ausgewählt ist.

7. Verwendung gemäß Anspruch 6, **dadurch gekennzeichnet, dass** die Epoxidverbindung 1,1'-Methylenbis(2-naphthyl)diglycidylether ist.

8. Verwendung gemäß einem der Ansprüche 2 bis 7, **dadurch gekennzeichnet, dass** die Härterkomponente mindestens ein anorganisches Salz, vorzugsweise $Ca(NO_3)_2$ und/oder $Ca(CF_3SO_3)_2$, umfasst.

9. Verwendung gemäß einem der Ansprüche 2 bis 8, **dadurch gekennzeichnet, dass** die Mehrkomponenten-Zusammensetzung in Patronen, Kartuschen oder Folienbeuteln vorliegt, die zwei oder mehrere voneinander getrennte Kammern umfassen, in welchen die Epoxidharzkomponente (A) und die Härterkomponente (B) reaktionsinhibierend voneinander getrennt angeordnet sind.

10. Verwendung gemäß einem der vorhergehenden Ansprüche, **dadurch gekennzeichnet, dass** das härtbare Epoxidharz ein Diglycidylether von Bisphenol A oder von Bisphenol F oder ein Gemisch davon umfasst.

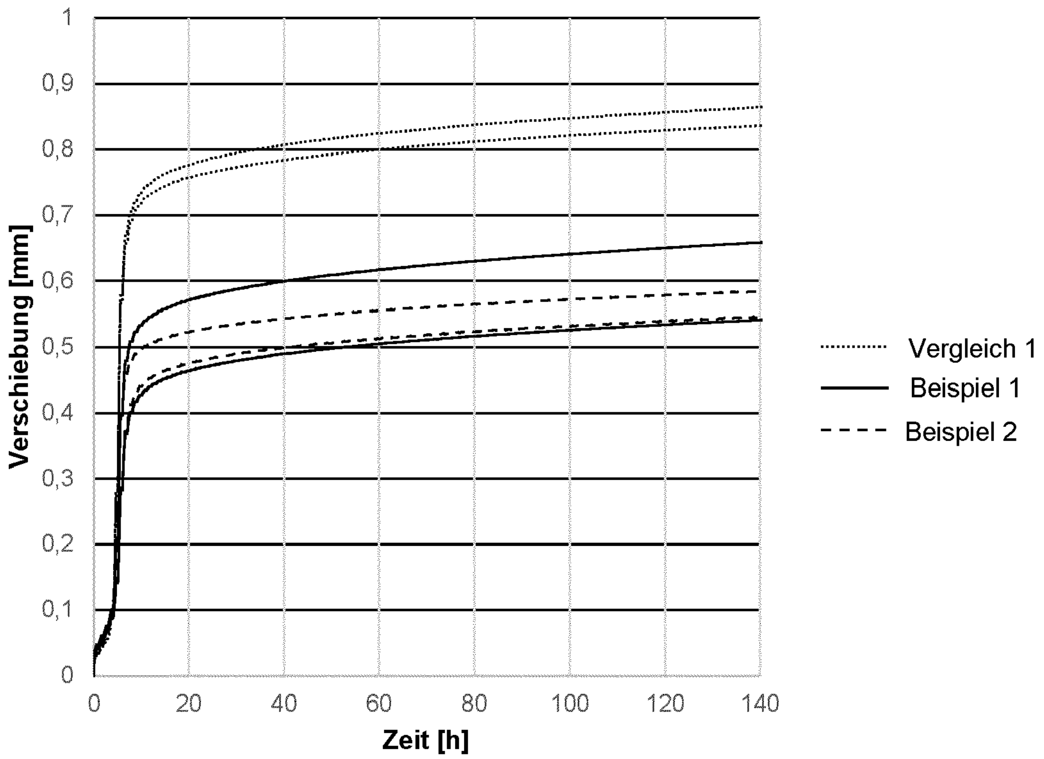
1
0,9
0,8
0,7
0,6
0,5
0,4
0,3
0,2
0,1
0
Verschiebung [mm]
0
20
40
60
80
100
120
140
Zeit [h]
Vergleich 1
Beispiel 1
Beispiel 2

Fig. 1

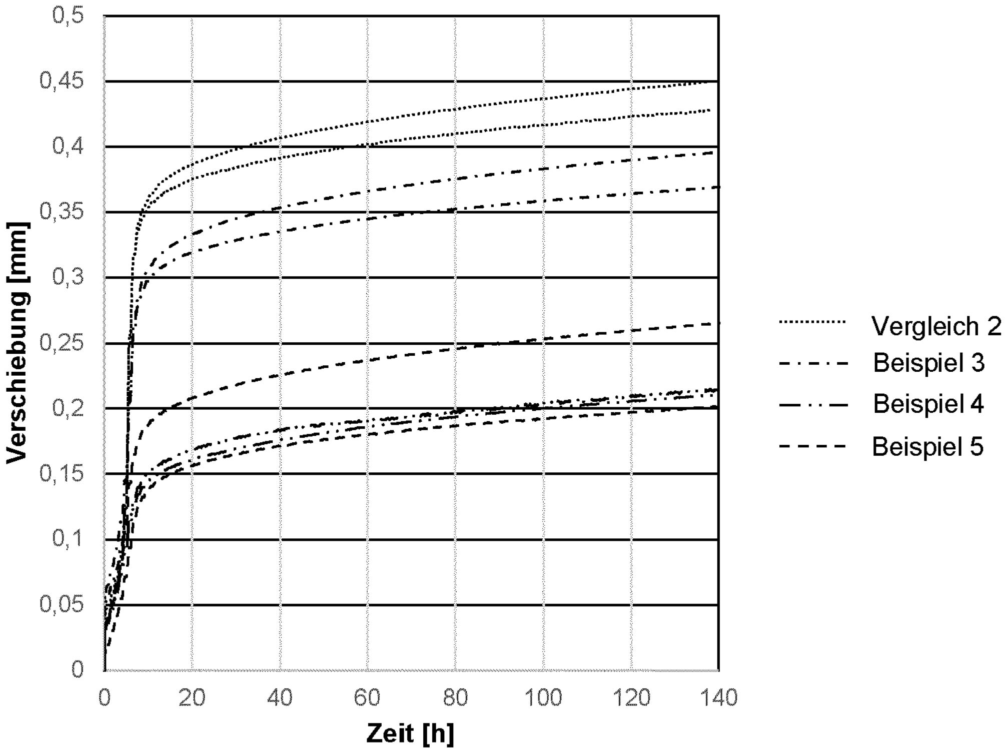
0,5
0,45
0,4
0,35
0,3
0,25
0,2
0,15
0,1
0,05
0
Verschiebung [mm]
0
20
40
60
80
100
120
140
Zeit [h]
Vergleich 2
Beispiel 3
Beispiel 4
Beispiel 5

Fig. 2

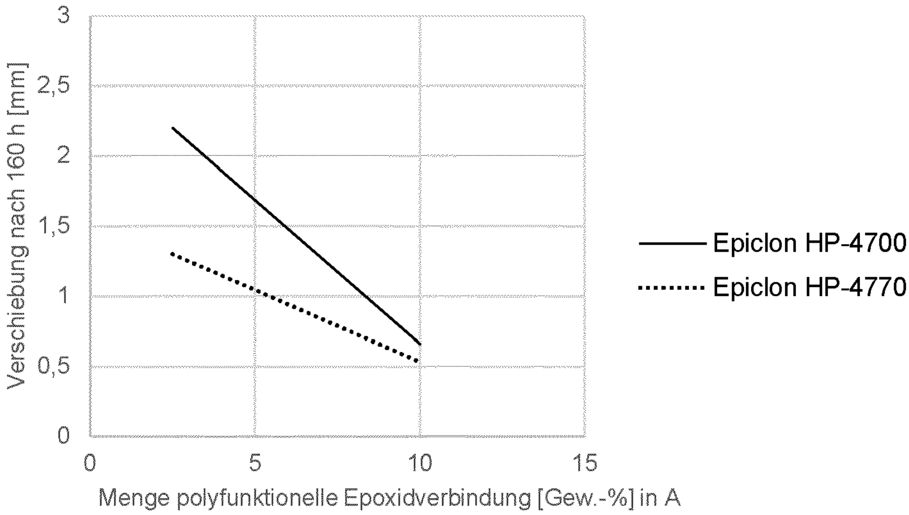
3
2,5
2
1,5
1
0,5
0
0
5
10
15
Verschiebung nach 160 h [mm]
Menge polyfunktionelle Epoxidverbindung [Gew.-%] in A
Epiclon HP-4700
Epiclon HP-4770

Fig. 3

Europäisches Patentamt
European Patent Office
Office européen des brevets

# EUROPÄISCHER RECHERCHENBERICHT

Nummer der Anmeldung
EP 23 21 3220

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 3 853 285 B1 (HILTI AG [LI]) 13. Juli 2022 (2022-07-13) * Absätze [0002] - [0004] * * Absatz [0009] * * Absätze [0079] - [0080] * ----- | 1-10 | INV. C08G59/50 C04B40/06 |
| Y | EP 3 853 280 B1 (HILTI AG [LI]) 22. Juni 2022 (2022-06-22) * Absatz [0001] * * Absatz [0002] * * Absatz [0059] * ----- | 1-10 | |
| Y | EP 1 118 628 A1 (HILTI AG [LI]) 25. Juli 2001 (2001-07-25) * Ansprüche 1-20 * * Absätze [0008] - [0012] * ----- | 1-10 | |
| | | | RECHERCHIERTE SACHGEBIETE (IPC) |
| | | | C08G C08K C04B |

Der vorliegende Recherchenbericht wurde für alle Patentansprüche erstellt

3

| Recherchenort | Abschlußdatum der Recherche | Prüfer |
|---|---|---|
| Den Haag | 27. März 2024 | Mensah, Laure |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 23 21 3220

In diesem Anhang sind die Mitglieder der Patentfamilien der im obengenannten europäischen Recherchenbericht angeführten Patentdokumente angegeben. Die Angaben über die Familienmitglieder entsprechen dem Stand der Datei des Europäischen Patentamts am Diese Angaben dienen nur zur Unterrichtung und erfolgen ohne Gewähr.

27-03-2024

| Im Recherchenbericht angeführtes Patentdokument | Datum der Veröffentlichung | Mitglied(er) der Patentfamilie | Datum der Veröffentlichung |
|---|---|---|---|
| EP 3853285 B1 | 13-07-2022 | AU 2019341456 A1 | 18-02-2021 |
| | | CA 3107086 A1 | 26-03-2020 |
| | | CN 112673044 A | 16-04-2021 |
| | | EP 3853285 A1 | 28-07-2021 |
| | | ES 2925624 T3 | 19-10-2022 |
| | | JP 7182699 B2 | 02-12-2022 |
| | | JP 2022503728 A | 12-01-2022 |
| | | US 2021324134 A1 | 21-10-2021 |
| | | WO 2020058015 A1 | 26-03-2020 |
| EP 3853280 B1 | 22-06-2022 | AU 2019343280 A1 | 18-02-2021 |
| | | CA 3107087 A1 | 26-03-2020 |
| | | CN 112673043 A | 16-04-2021 |
| | | EP 3853280 A1 | 28-07-2021 |
| | | ES 2923248 T3 | 26-09-2022 |
| | | JP 7142771 B2 | 27-09-2022 |
| | | JP 2022501471 A | 06-01-2022 |
| | | US 2022033570 A1 | 03-02-2022 |
| | | WO 2020058016 A1 | 26-03-2020 |
| EP 1118628 A1 | 25-07-2001 | AU 776763 B2 | 23-09-2004 |
| | | CA 2331162 A1 | 21-07-2001 |
| | | CN 1311172 A | 05-09-2001 |
| | | DE 10002605 A1 | 09-08-2001 |
| | | EP 1118628 A1 | 25-07-2001 |
| | | ES 2225454 T3 | 16-03-2005 |
| | | JP 5043256 B2 | 10-10-2012 |
| | | JP 2001240653 A | 04-09-2001 |
| | | MX PA01000057 A | 16-08-2005 |
| | | TW I221466 B | 01-10-2004 |
| | | US 2001035111 A1 | 01-11-2001 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1118628 A1
- EP 0824124 A
- EP 3000792 A1


### In der Beschreibung aufgeführte Nicht-Patentliteratur


- *CHEMICAL ABSTRACTS*, 13374-44-2
- *CHEMICAL ABSTRACTS*, 96-08-2
- *CHEMICAL ABSTRACTS*, 1584677-14-4
- *CHEMICAL ABSTRACTS*, 4223-14-7
- *CHEMICAL ABSTRACTS*, 1393710-63-8
- *CHEMICAL ABSTRACTS*, 105839-17-6
- *CHEMICAL ABSTRACTS*, 1260636-34-7
- *CHEMICAL ABSTRACTS*, 63284-28-6
- **MICHAEL DORNBUSCH** ; **ULRICH CHRIST** ; **ROB RASING**. Epoxidharze. Vincentz Network GmbH & Co KG, 2015
- **LEE HAND NEVILLE K**. Handbook of Epoxy Resins. McGraw-Hill, 1982